# EUROPEAN PATENT APPLICATION

(11) **EP 3 838 419 A1**
(43) Date of publication of application: **23.06.2021**
(21) Application number: 20214644.5
(22) Date of filing: 16.12.2020
(51) Int. Cl.: B05B 7/02, B05B 12/02, B05B 13/04, F16L 58/18

(54) **PIPELINE SPRAYER APPARATUS**

(30) Priority: 20.12.2019 US 201916722227
(71) Applicant: CRC-Evans Pipeline International, Inc., Houston, Texas 77066 (US)
(72) Inventor: GEORGE, Michael, Tomball, TX 77375 (US); BARLETT, Garrett, Claremore, OK 74019 (US); BOND, Timothy, Cypress, TX 77429 (US); MALLICK, Siddharth, Spring, TX 77379 (US)
(74) Representative: SBD IPAdmin

(57) **Abstract**

A sprayer apparatus for coating a girth weld and a cutback region surrounding the girth weld on a steel pipe, the steel pipe having a longitudinal axis, comprises a frame, an arm, and a controller. The frame includes a roller carriage configured for rollably mounting the frame to a track mounted substantially circumferentially around the pipe, the frame also including a powered propulsion assembly for propelling the roller carriage along the track substantially circumferentially around the pipe. The arm extends or is extendable from the frame, the arm supporting a spray head. The frame also includes: a powered indexing assembly for moving the arm and the spray head longitudinally relative to the frame; a cartridge for storing a liquid to be sprayed onto the pipe via the spray head; a powered cartridge gun for forcing the liquid out of the cartridge to the spray head; and a pressurized air supply for delivering pressurized air to the spray head to control the liquid spray from the spray head. The controller is configured for controlling: the powered propulsion assembly and the powered indexing assembly; and the powered cartridge gun and/or a pressure level of the pressurized air supply to the spray head.

## Description

The present invention relates to an apparatus for coating pipes, particularly for coating the exposed steel weld joint cutback area of an oil or gas pipeline as it is being built.

Pipelines in the oil and gas industry are typically formed from multiple lengths of steel pipe sections that are welded together end-to-end as they are being laid. To prevent corrosion of the pipe sections and to reduce heat loss of fluids transported by pipelines, the pipe sections are coated with one or more protective and/or insulative layers, typically with a polyolefin coating, or a multi-layer coating comprising for example an epoxy first coat followed by a polyethylene or polypropylene top coat. The pipe sections are usually coated at a factory remote from the location in which they are to be laid. This is often referred to as factory-applied coating and it is generally more cost effective than coating pipe sections on site where they are laid. At the factory, the coating is applied to the outside of the pipe sections whereupon a short length is left uncoated (the "cutback region") at either end of the pipe section. The uncoated ends are necessary to enable the pipe sections to be welded together (by "girth welds") to form the pipeline in the field. The welded ends, known as field joints, must be coated in the region of the joint to provide the necessary protection and/or insulation. The coating in these regions is referred to as the field joint coating.

An apparatus for coating pipes, particularly for coating the exposed steel weld joint cutback area of an oil or gas pipeline as it is being built, is known from US 2019/0314846 A1. The present invention seeks to provide a sprayer apparatus which is an improvement on such a known apparatus.

A first aspect of the present invention provides a sprayer apparatus according to Claim 1 of the appended claims.

Preferred, and other optional, features of the invention are described and defined in the dependent claims.

Accordingly, the first aspect of the present invention provides a sprayer apparatus for coating a girth weld and a cutback region surrounding said girth weld on a steel pipe having a longitudinal axis (and references to "longitudinal" and "longitudinally" herein refer to the longitudinal axis of the steel pipe). The sprayer apparatus arrangement preferably includes the following features. A track preferably is affixed around the pipe proximal longitudinally to the cutback region and affixed circumferentially around the steel pipe. A frame of the apparatus including a roller carriage preferably is configured for rollably mounting to the track. The frame preferably further includes a powered propulsion assembly for propelling the roller carriage circumferentially around said track. The apparatus includes an arm, which preferably is cantilevered longitudinally from the carriage, the arm including a spray head extending therefrom. The frame also includes a powered indexing assembly for moving the arm and spray head longitudinally relative to the carriage. The frame further includes a cartridge for storing a liquid to be sprayed onto the pipe via the spray head. The frame also includes a powered cartridge gun for forcing the liquid out of the cartridge to the spray head. Moreover, the frame includes a pressurized air supply for delivering pressurized air to the spray head, preferably to control a pattern of the liquid as the liquid is sprayed from the spray head. The apparatus also includes a controller for controlling the powered propulsion assembly, the powered indexing assembly, and at least one of the powered cartridge gun and the pressure level from the pressurized air supply to the spray head.

A further aspect of the present invention provides a system for filling a refillable cartridge with liquid, the system comprising: a refillable cartridge, a liquid supply source, and a cartridge fill actuator; the liquid supply source including at least one container for storing a refilling liquid, the liquid supply source also including a discharge connection, the discharge connection including a discharge connector through which refilling liquid is discharged to the refillable cartridge, the discharge connection also including a valve between the at least one container and the discharge connector for controlling a flow of refill liquid through the discharge connector; the refillable cartridge including an inlet connector through which liquid is received from the liquid supply source, the inlet connector for fluid connection to the discharge connector of the liquid supply source, the refillable cartridge including a sleeve and a cylinder, the cylinder movable within the sleeve away from the inlet connector to pull refillable liquid into the sleeve; the cartridge fill actuator, including a powered shaft, a distal end of the powered shaft selectively connectable to the cylinder to pull the cylinder relative to the sleeve and away from the inlet connector to draw refilling liquid into the sleeve to fill the sleeve. Preferably, the system for filling a refillable cartridge with liquid, is for liquid to be sprayed by a sprayer apparatus for coating a steel pipe, preferably a sprayer apparatus according to the present invention.

Embodiments of the invention will now be described, by way of example, with reference to the accompanying figures, of which:
FIG. 1 shows a cutback region of a welded pipe to be coated by a sprayer apparatus of the invention.
FIG. 2 shows a cutback region of a welded pipe with dressing to be coated by a sprayer apparatus of the invention.
FIG. 3 shows an embodiment of a sprayer apparatus according to the invention strapped to the welded pipe according to FIG. 2.
FIG. 4A shows the sprayer apparatus embodiment according to the invention strapped to the welded pipe according to FIG. 2 and indexed spray patterns.
FIG. 4B shows the sprayer apparatus embodiment according to the invention strapped to the welded pipe according to FIG. 2. and indexed spray positions.
FIG. 5A shows the sprayer apparatus embodiment according to the invention fastened to a pipe with a spray stream tilted relative to a pipe longitudinal axis.
FIG. 5B shows a perspective view of a portion of the sprayer apparatus embodiment according to the invention with a pivot axis of a spray head perpendicular to a pipe longitudinal axis.
FIG. 6 shows the sprayer apparatus embodiment according to the invention strapped to the welded pipe according to FIG. 2 and a welding interface.
FIG. 7A shows the sprayer apparatus embodiment according to the invention strapped to the welded pipe according to FIG. 2 and indexed spray patterns.
FIG. 7B shows a table having suggested relative conditions for flow rate and spray pressure vs. indexing position.
FIG. 8 shows a longitudinal view of the sprayer apparatus embodiment according to the invention strapped to the welded pipe according to FIG. 2.
FIGS. 9A and 9B show an embodiment of a cartridge refill station according to the present invention, in side front view and top perspective respectively.
FIG. 10 shows steps in a process of refilling a cartridge using the cartridge refill station of FIGS. 9A and 9B.

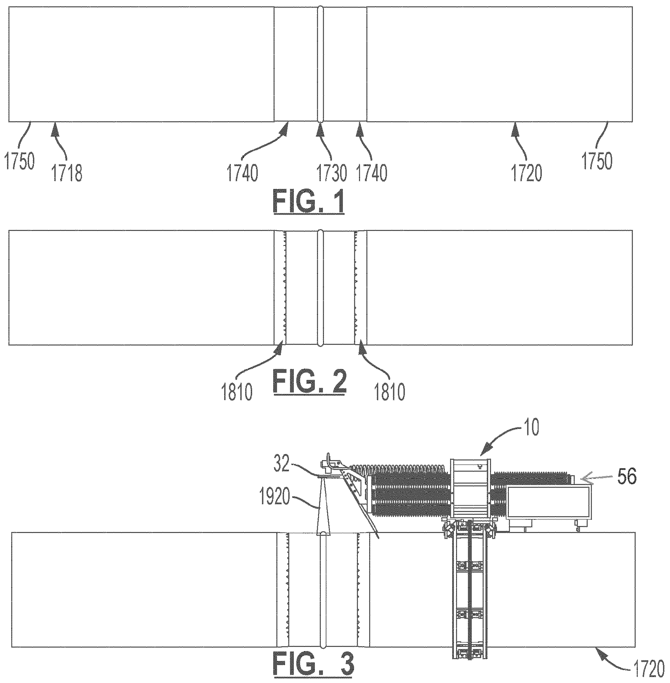

Figure 1 shows two pipes joined together by welding and inspection. Specifically, a first pipe **1710** is joined to a second pipe **1720** by a girth weld **1730.** Pipes **1710** and **1720** are covered in the factory by factory insulation **1750** except for a bare portion **1740** of pipes **1710** and **1720** in proximity to weld **1730.** Pipe portion **1740** is referred to herein as the cutback region. Figure 2 again shows the bare cutback region of the pipe between the factory coating to be coated. About 2 inches at the interface between factory coating **1750** and the bare pipe **1740** may be dressed **1810** to improve adhesion (e.g., adhesion of any coating sprayed on the cutback region). The dressing **1810** may taper off on both sides toward the weld and may provide a seal between the dressing and the factory coating.

Figures 3 to 8 show an embodiment of a sprayer apparatus **10** according to the invention, attached to pipe **1720.** The sprayer apparatus **10** is of the type known to the skilled person from US 2019/0314846 A1, but with the novel and inventive improvements disclosed and claimed herein. As described above, the sprayer apparatus **10** according to the invention is for coating a girth weld **1730** and a cutback region **1740** surrounding the girth weld **1730** on a steel pipe **1710, 1720,** the steel pipe having a longitudinal axis, the sprayer apparatus **10** comprising a frame **20,** an arm **66** , and a controller (not shown). The controller may be mounted on the frame **20,** and/or it may be separate from the main part of the sprayer apparatus **10** which is mounted on the pipe **1720** during use. For example, at least part of the controller may be located in a separate control panel or control box (not shown) of the sprayer apparatus **10,** and/or the controller may comprise a separate unit of the sprayer apparatus **10,** which may communicate with the main part of the sprayer apparatus **10** via wired and/or wireless communication. In at least some embodiments of the invention, the functionality of the controller may be partly located on the frame **20** and partly separate therefrom.

The frame **20** includes a roller carriage **44** configured for rollably mounting the frame **20** to a track **12** mounted substantially circumferentially around the pipe **1720.** The frame **20** also includes a powered propulsion assembly **34** for engagement with a rack **16** of the track **12,** propelling the roller carriage **44** along the track substantially circumferentially around the pipe. The arm **66,** which as shown may comprise a plurality struts (e.g. three struts, as illustrated), extends and/or is extendable longitudinally from the frame **20** and supports a spray head **64.** The frame **20** also includes: a powered indexing assembly (indicated generally by **80)** for moving the arm **66** and the spray head **64** longitudinally relative to the frame **20;** at least one cartridge **48, 50** for storing a liquid to be sprayed onto the pipe via the spray head **64;** a powered cartridge gun (indicated generally by **56**) for forcing the liquid out of the cartridge **48, 50** to the spray head **64;** and a pressurized air supply (air hose **63**) for delivering pressurized air to the spray head **64** to control the liquid spray from the spray head. The controller is configured for controlling: the powered propulsion assembly **34** and the powered indexing assembly **80;** and the powered cartridge gun and/or a pressure level of the pressurized air supply **63** to the spray head **64.**

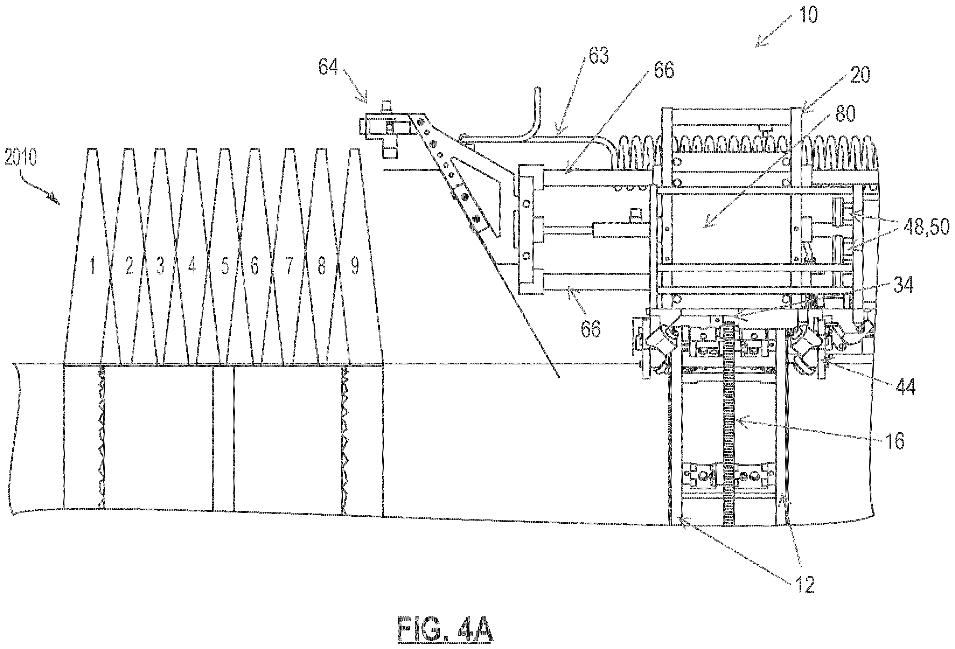

A spray stream **1920** flows from spray nozzle **32** in a fan shaped spray pattern onto weld **1730.** As discussed above, spray nozzle **32** of apparatus **10** may move automatically and/or incrementally back and forth in a direction parallel the longitudinal axis of pipe **1720.** So slide arm 66, stepper motor **80** and screw **82** function together with the controller to amount to an indexer for indexingly moving spray nozzle **32** longitudinally in, into and between discrete positions as show in figure 4A. Specifically, indexing may include not merely an automatic moving from position to position, but also a stopping for a period at a position (e.g., one of positions 1-9) before starting again. Figure 4A shows 9 discrete spray pattern positions **2010** associated with 9 corresponding discrete spray nozzle **32** positions. The nine positions are aligned with the longitudinal axis of the pipe **1710** and the nine spray patterns are superimposed to showing how the spray patterns would overlap to cover the surface of the cutback longitudinally at that particular angular positioning of apparatus 1 (e.g., at 12 o'clock or 1 o'clock looking down the pipe). The combined spray patterns **2010** cover the cutback which includes the dressing right up to the edge of the factory coating **1750.**

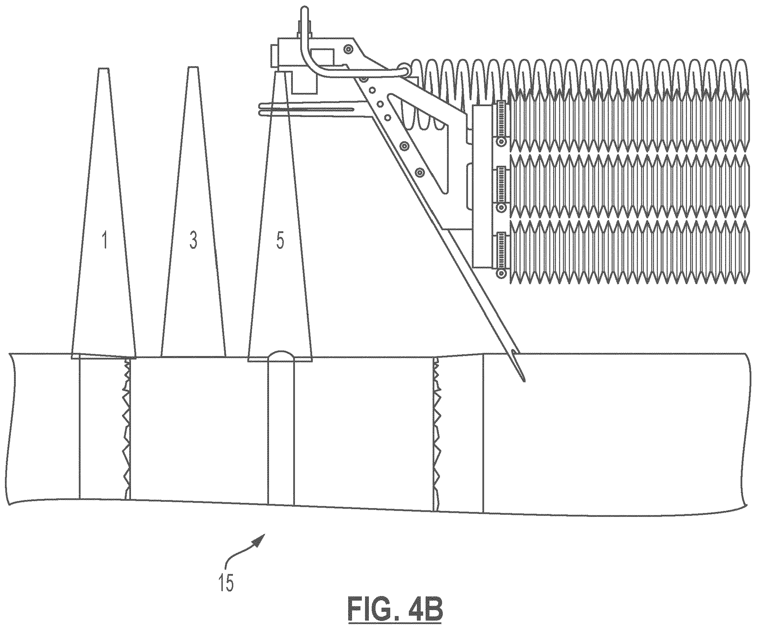

For a number of reasons, it may be desirable to apply spray coatings differently depending on the longitudinal indexing position (i.e., positions 1-9). For example, at some positions, the flow rate may be increased or decreased so that more or less spray material may be applied at that circular/orbital longitudinal position. For example, in Figure 4B, less spray may be needed at the longitudinal position nearest the factory coating where the dressing is (i.e., spray position 1) than where there is bare pipe (i.e., such as in position 3) since the dressing can be a partial coating. Similarly, it may be desirable to apply more coating at position 5 where weld **1730** is as that position has more surface area to cover than the bare pipe at position 3. When less spay is needed, the flow rate through nozzle **32** may be reduced during spraying at that longitudinal position in order to apply less coating material. Alternatively, the speed of the position of spray nozzle **32** might be increased so less time is spent applying material at a particular longitudinal position and less material is applied.

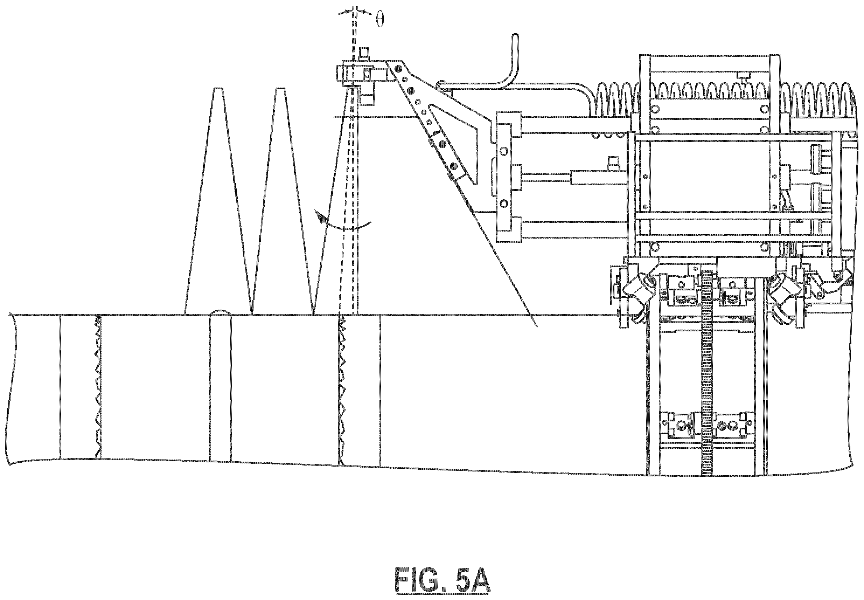

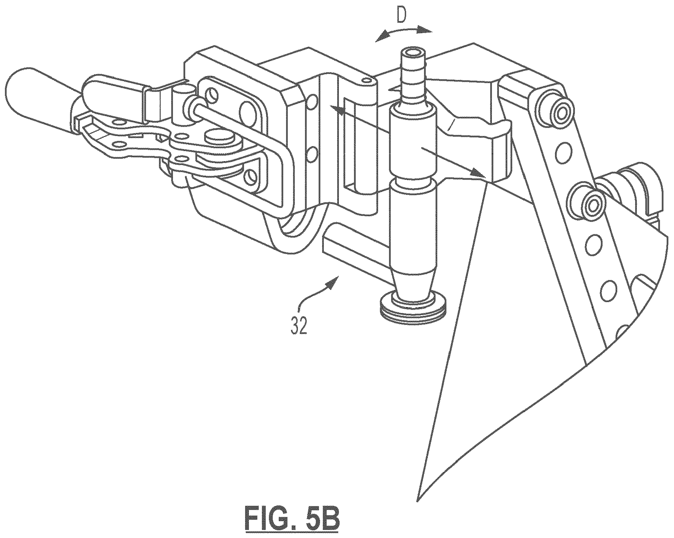

It has been discovered that the spray nozzle most uniformly and precisely distributes spray material and the spray pattern is most/best defined when spray material supply hose 134 defines a vertical channel immediately as material enters spray nozzle 32 from hose 134. In other words, the spray pattern is desirable when spray nozzle 32 is vertically oriented and at least an end portion of hose 134 is also vertically oriented to deliver spray material to nozzle 32 in line with nozzle 32. On the other hand, spray apparatus 10 may also employ a pray head tilt feature (i.e., nozzle 32 tilts with the spray head) in order to most effectively distribute spray material onto the pipe exterior. Figure 5A shows a spray apparatus 10 which has sprayed three different streams of spray material at three different spray locations. Specifically, the spray location closest to spray apparatus 10 is sprayed at an angle that is tilted relative the two other pray material spray streams. In other words, the two leftmost spray streams of Figure 5A are delivered by a spray nozzle that is vertically oriented while the rightmost spay stream is tilted toward the left. As discussed above, the ability of spray apparatus 10 to tilt its nozzle would enable spray apparatus to limit overspray at the edges of where spray is to be applied. Figure 5B shows a spray head with a nozzle 32 or air spray tip. Nozzle 32 has a spray axis about which nozzle 32 can pivot or tilt in directions D in order to adjust the angle of the spray stream relative to the pipe longitudinal axis.

The tilt may be automatically adjusted to an angle theta (i.e., angle between a longitudinal center of the flow stream and a vertical line from spray nozzle 32 and perpendicular to the pipe longitudinal axis). Automatic or powered movement may be controlled by a controller. The controller may send a signal to mechanical movers (e.g., electric solenoids or pneumatic cylinders). The tilt angle may also be controlled by a mechanical structure such as a cam and/or cam follower which engages/pivots the nozzle at a particular position along the longitudinal travel of the spray head. In one embodiment the mechanical tilter can be a spring actuated device that triggers at set points in the longitudinal cross stream travel. In another embodiment the mechanical tilter could be motorized and provide continuous angle adjustment across the cross stream (as opposed to mere actuation at discrete positions). In any case, the tilt of the spray head may be adjusted with respect to the longitudinal position of the spray head along cutback region 15.

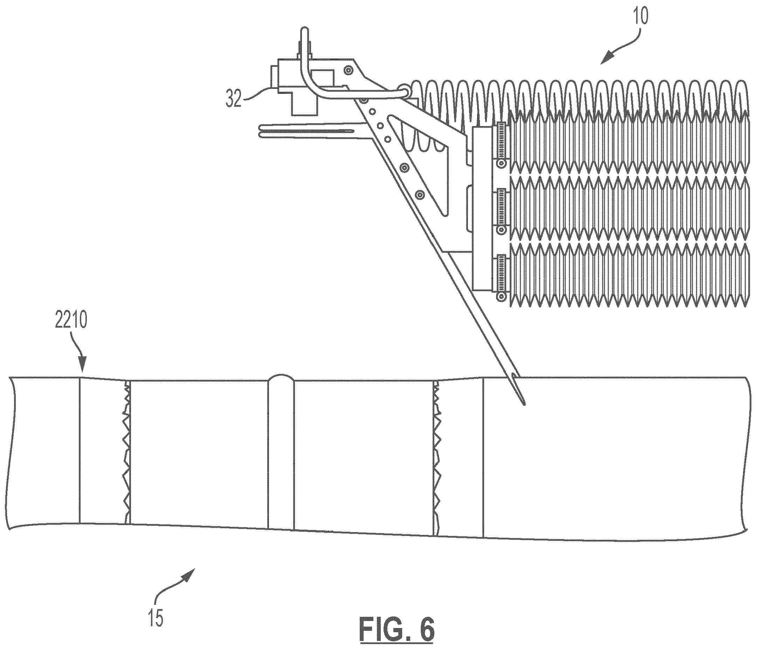

As mentioned above, spray nozzle **32** is supplied with a flow of pressurized air. The pressurized air is discharged from spray nozzle **32** together with the coating material in generally the same spray direction to disperse the coating material in a particular spray patter. For a given spray nozzle **32** at a given distance from the pipe surface, the spray pattern can be modified by adjusting, modifying, or regulating the pressure of supplied air. Specifically, increasing the supplied air pressure tends to focus the spray pattern (more control and/or more defined pattern) and lowering the pressure tends to loosen the spray pattern (less control and/or less defined pattern). For example, and as shown in Figure 6, in order to avoid over spraying at the interface **2210** between the dressing and the factory coating, it may be desirable to increase air pressure to increase focus and control of the spray pattern to reduce overspray. On the other hand, in other longitudinal positions (e.g., positions 3-7) away from interface **2010,** an optimal spray pressure may be used concerned only that a smooth coat is applied to the bare pipe and/or weld.

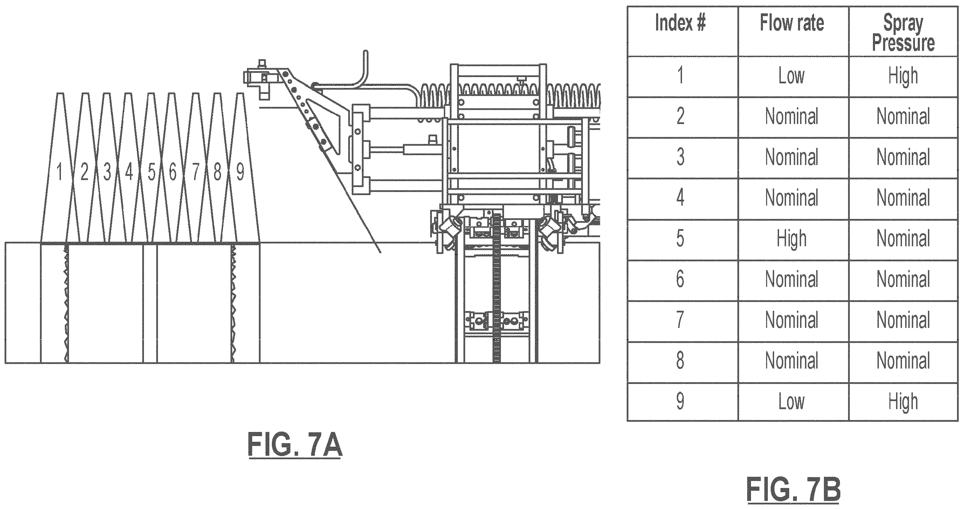

Figures 7A and 7B show a chart that describes some suggestions for varying certain parameters (i.e., flow rate and spray pressure) for each of the nine indexed longitudinal positions described above. For example, at position 1 where less coating material is needed on the dressing, but more control is needed to avoid overspray, the flow rate can be relatively "LOW" compared to a bare pipe position and the spray pressure can be relatively "HIGH" compared to bare pipe position. In addition, for example, at position 3 where the spray pattern only covers bare pipe, both flow rate and nozzle air pressure can be "NORMAL" (i.e., higher and lower respectively relative to position 1). Finally, at the weld position 5, flow rate can be high to cover the additional area of the weld and spray pressure can be normal because spray pattern focus or definition is not critical at the weld away from the dressing and factory coating.

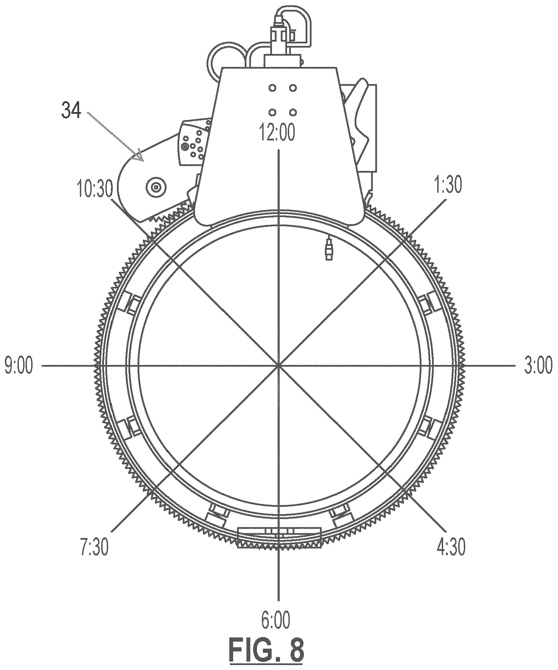

Figure 8 shows the apparatus **10** installed on a pipe looking down the longitudinal axis of the pipe. Figure 8 shows various angular positions of the apparatus **10.** The present invention contemplates a spray machine that is also capable of adjusting the coating material flow rate and/or the nozzle air pressure in terms of the angular position of apparatus **10** as shown in Figure 8. As apparatus **10** moves around the pipe, spray from the nozzle which is subject to gravity is applied to the pipe in a different pattern depending on the position of apparatus **10.** In other words, a spray radially inward from an apparatus position of 3:00 o'clock or 9:00 o'clock would create a pattern on the pipe slightly lower relative to spray nozzle **32** than the pattern that would be created had the apparatus **10** been at 12:00 o'clock. In addition, spraying of coating material while spray nozzle **32** is moving relative to the pipe creates a spray pattern different that when there is no movement or a different speed movement. Therefore, varying the coating material flow rate and/or the nozzle air spray pressure relative to either radial position of apparatus **10** or speed or change of speed of the spray nozzle can provide additional control of the ultimate application of coating material on the pipe.

In use, the track **12** is fixed on the pipe. Then the apparatus **10** is adjusted (calibrated) so that the mid-stroke of the longitudinal actuator **80** of sliding arm **66** is in line with weld **1730.** In other words, slide arm **66** is set to have equal reach from weld **1730** toward the factory coating **1750** in both longitudinal directions. Slide arm **66** is also adjusted so that it extends longitudinally in alignment with the longitudinal axis of pipe **1710, 1720.** Spray nozzle **32** is indexed to one of the 9 positions. The process can have more or less than 9 positions depending on the size of the pipe, size of the spray patter, distance between the spray nozzle and the pipe, etc. Apparatus **10** can then apply coating material orbitally around the pipe at the particular indexed position and the particular spray setting (i.e., low or high flow rate vs. index position, low or high spray pressure vs. index position, low or high flow rate vs. axial apparatus position, low or high spray pressure vs. axial apparatus position).

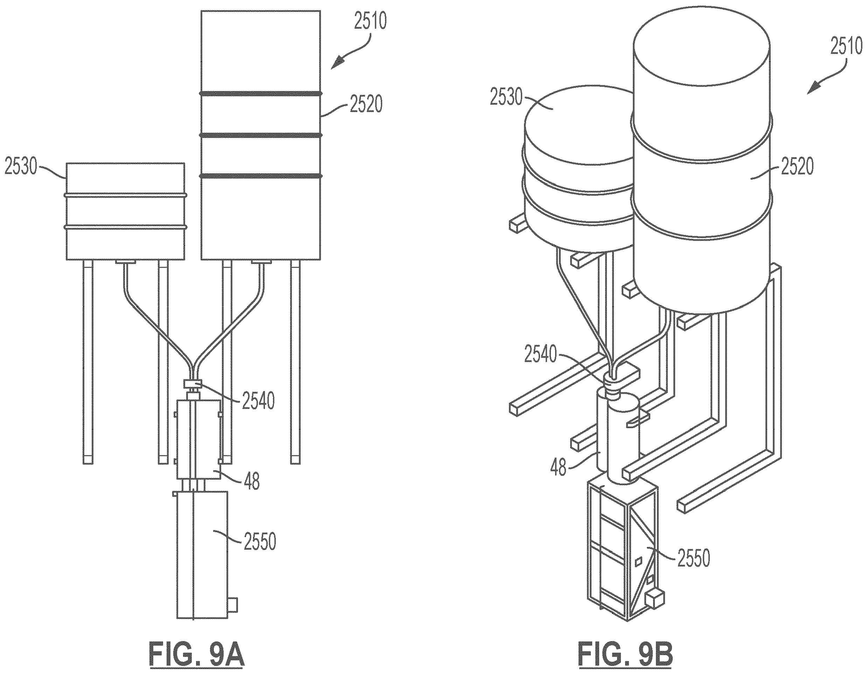

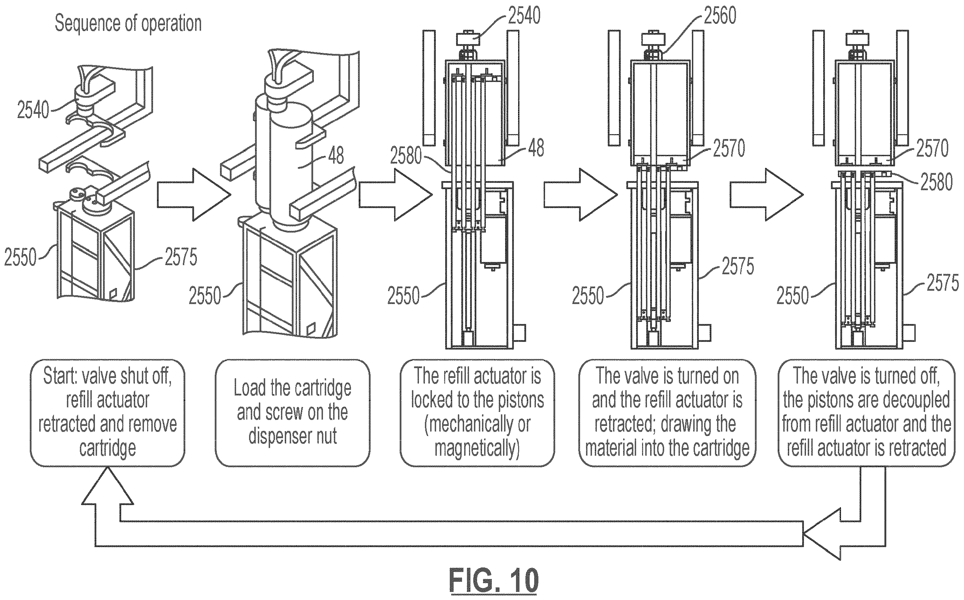

As discussed above, cartridges **48** and **50** are refillable, as illustrated in figures 9A, 9B and 10. Cartridges **48, 50** include and input/output valve **2560** through which coating material may enter cartridge **48, 50** during refill or leave cartridge **48, 50** during operation of apparatus **10.** Cartridge **48, 50** also includes a moving wall or piston **2570.** The present invention contemplates a refill station **2510.** Filling station **2510** includes one or more material storage containers **2520, 2530.** Material storage containers **2520, 2530** include one or more discharge valve(s) **2540.** The discharge valves **2540** may include quick connect connectors for quick connection to an input/output valve of cartridge **48.** Filling station **2510** also includes a fill actuator **2550.** Fill actuator **2550** is a powered (e.g., electric or pneumatic) actuator with an extension that extend and retracts from a base. A pneumatically powered actuator may include a piston and cylinder and an electric actuator may include a motor and screw mechanism. Extension **2580** is connectible to moving wall **2570** of cartridge **48, 50.** Extension **2580** can be connected to moving wall **2570** of cartridge **48, 50.** When extension **2580** is connected to moving wall **2570,** fill actuator **2550** can retract extension **2580** relative to base **2575** so that moving wall **2570** is retracted relative to cartridge **48, 50** to draw coating material from storage containers **2520, 2530,** through discharge valve **2540,** through input/output valve and into cartridge **48, 50** for refill of cartridge **48, 50.**

In use, a technician approaches refill station **2510.** The technician connects an empty cartridge **48, 50** to refill station **2510.** Specifically, input/output valve **2560** is quick connected to discharge valve **2540.** That quick connection may or may not automatically open discharge valve **2540.** In addition, extension **2580** is connected to moving wall **2570.** Fill actuator **2550** is then actuated to retract extension **2580** and moving wall **2570** to draw coating material into respective compartments from fill containers **2520, 2530** in the manner described above. The technician then quick disconnects input/output valve **2560** from discharge valve **2540** and valve **2540** may or may not then automatically close. Cartridge **48, 50** may then be reinstalled into apparatus **10** for discharge of its new contents.

The embodiments of the present invention described above are intended to be examples, and the invention may be embodied in other forms falling within the scope of the claims.

## Claims

1. A sprayer apparatus for coating a girth weld and a cutback region surrounding the girth weld on a steel pipe, the steel pipe having a longitudinal axis, the sprayer apparatus comprising a frame, an arm, and a controller, wherein:
the frame includes a roller carriage configured for rollably mounting the frame to a track mounted substantially circumferentially around the pipe, the frame also including a powered propulsion assembly for propelling the roller carriage along the track substantially circumferentially around the pipe;
the arm extends or is extendable from the frame, the arm supporting a spray head;
the frame also includes: a powered indexing assembly for moving the arm and the spray head longitudinally relative to the frame; a cartridge for storing a liquid to be sprayed onto the pipe via the spray head; a powered cartridge gun for forcing the liquid out of the cartridge to the spray head; and a pressurized air supply for delivering pressurized air to the spray head to control the liquid spray from the spray head; and
the controller is configured for controlling: the powered propulsion assembly and the powered indexing assembly; and the powered cartridge gun and/or a pressure level of the pressurized air supply to the spray head.

2. A sprayer apparatus according to Claim 1, wherein the controller is mountable or mounted to the frame and/or is a separate controller, and preferably wherein the controller is configured to communicate with the powered propulsion assembly and the powered indexing assembly, and the powered cartridge gun and/or the pressurized air supply, preferably by wired and/or wireless communication.

3. A sprayer apparatus according to Claim 1 or Claim 2, wherein the control of the powered propulsion assembly and/or the powered indexing assembly and/or the powered cartridge gun and/or a pressure level of the pressurized air supply to the spray head, by the controller, is configured to depend upon a longitudinal indexed position of the spray head and/or the arm, preferably relative to the frame, preferably along the cutback region of the pipe.

4. A sprayer apparatus according to any preceding claim, wherein the controller is configured to direct, or otherwise cause, the powered cartridge gun to vary a flow rate of the liquid supplied to the spray head.

5. A sprayer apparatus according to Claim 4, wherein the variation in flow rate is dependent on the longitudinal position of the spray head and/or the arm, preferably relative to the frame, preferably along the cutback region of the pipe.

6. A sprayer apparatus according to any preceding claim, wherein the controller is configured to direct, or otherwise cause, the pressurized air supply to vary the pressure of air supplied to the spray head.

7. A sprayer apparatus according to claim 6, wherein the variation in air pressure is dependent on the longitudinal position of the spray head and/or the arm, preferably relative to the frame, preferably along the cutback region of the pipe.

8. A sprayer apparatus according to any preceding claim, wherein the controller is configured to set a thickness of the applied spray material by directing, or otherwise causing, the powered cartridge to vary the liquid flow rate, and/or by directing, or otherwise causing, the pressurized air supply to vary the air pressure supplied to the spray head, and/or by directing, or otherwise causing the powered propulsion assembly and/or the powered indexing assembly to control the speed of movement of the spray head, preferably relative to the pipe.

9. A sprayer apparatus according to any preceding claim, wherein the controller is configured to direct, or otherwise cause, the powered indexing assembly to indexingly adjust the spray head into multiple longitudinal positions relative to the frame, preferably along the cutback region of the pipe, preferably so that adjacent index positions produce spray patterns that mutually overlap.

10. A sprayer apparatus according to any preceding claim, wherein the spray head includes a spray nozzle, and preferably wherein the spray nozzle is pivotable relative to the arm.

11. A sprayer apparatus according to any preceding claim, further comprising a material supply hose for supplying spray material to a spray nozzle of the spray head, and preferably wherein at least a portion of the spray hose at a connection between the spray hose and the spray nozzle guides spray material parallel to a longitudinal axis of the spray nozzle.

12. A sprayer apparatus according to any preceding claim, wherein the arm extends or is extendable from the roller carriage of the frame, and preferably wherein the powered indexing assembly is configured to move the arm and the spray head longitudinally relative to the roller carriage of the frame.

13. A sprayer apparatus according to any preceding claim, wherein the spray head extends from the arm.

14. A sprayer apparatus according to any preceding claim, wherein the pressurized air supply, for delivering pressurized air to the spray head, is configured to control a pattern of the liquid as the liquid is sprayed from the spray head.

15. A sprayer apparatus according to any preceding claim, further comprising a said track mountable or mounted around the pipe, preferably wherein the track is mountable or mounted to the pipe by being clamped or otherwise affixed to the pipe, for example on a coating on the pipe.
